# EUROPÄISCHE PATENTANMELDUNG

(11) **EP 1 990 696 A1**
(43) Veröffentlichungstag der Anmeldung: **12.11.2008**
(21) Anmeldenummer: 08008467.6
(22) Anmeldetag: 06.05.2008
(51) Int. Cl.: G05B 19/042, G05B 19/414

(54) **Systemarchitektur für eine industrielle Nähmaschine**

(30) Priorität: 08.05.2007 DE 102007021992
(71) Anmelder: Frankl & Kirchner GmbH. & Co. KG Fabrik für Elektromotoren und elektrische Apparate, D-68723 Schwetzingen (DE)
(72) Erfinder: Böhm, Rainer, 68782 Brühl (DE); Faulhaber, Michael, 68199 Mannheim (DE); Knop, Michael, 68804 Altlussheim (DE); Lakatos, Bernhard, 69242 Mühlhausen (DE); Schmidt, Thomas, 69231 Rauenberg (DE); Sinn, Wolfgang, 69231 Rauenberg (DE); Vetter, Karl-Heinz, 68789 St. Leon-Rot (DE)
(74) Vertreter: Hofmann, Matthias

(57) **Zusammenfassung**

Eine Maschinensteuerung (1) hat eine Steuerungseinrichtung (2) und eine Positioniereinrichtung (26). Die Steuerungseinrichtung (2) hat eine Werkzeug-Mikroprozessoreinheit (6) und mindestens eine Werkzeug-Ansteuer-Schnittstelle (8) für einen Werkzeugantrieb (3). Die Positiomereinrichtung (26) hat eine Positionier-Mikroprozessoreinheit (25) und mindestens eine Positioniez-Ansteuer-Schnittstehe (31, 32) für einen Positioniexantrieb (33, 34). Die Steuerungseinrichtung (2) und die Positioniereinrichtung (26) sind in einem gemeinsamen Gehäuse (27) untergebracht. Es resultiert eine Maschinensteuerung zur Ansteuerung des Werkzeugsantriebs und des Positionierantriebs, die kompakt ausgeführt ist und dennoch flexibel eingesetzt werden kann.

## Beschreibung

Die Erfindung betrifft eine Maschinensteuerung zur Ansteuerung eines Werkzeugantriebs und eines Positionierantriebs.

Eine derartige Maschinensteuerung ist durch offenkundige Vorbenutzung bekannt. Für derartige Maschinensteuerungen gibt es eine große Vielfalt von Anwendungsmöglichkeiten, da bei Werkzeugmaschinen üblicherweise einerseits ein Werkzeug über einen Werkzeugantrieb und andererseits ein Werkstück über einen Positionierantrieb bewegt werden.

Bekannte Maschinensteuerungen sind für den individuellen Anwendungszweck ausgelegt und daher nicht flexibel einsetzbar. Andere, modular aufgebaute Maschinensteuerungen benötigen hingegen einen sehr großen Bauraum, was bei vielen Anwendungen nicht toleriert werden kann.

Es ist daher eine Aufgabe der vorliegenden Erfindung, eine Maschinensteuerung zur Ansteuerung eines Werkzeugantriebs und eines Positionier-antriebs derart weiterzubilden, dass sie kompakt ausgeführt ist und dennoch flexibel eingesetzt werden kann.

Diese Aufgabe ist erfindungsgemäß gelöst durch eine Maschinensteuerung mit den im Anspruch 1 angegebenen Merkmalen.

Erfindungsgemäß wurde erkannt, dass es aufgrund der Tatsache, dass viele Anwendungen von Maschinensteuerungen gleichzeitig einen Werkzeug- und einen Positionierantrieb erfordern, von Vorteil ist, wenn die Steuerungseinrichtungen für diese Antriebe in einem gemeinsamen Gehäuse integriert werden können. Dies führt zu einer kompakten Maschinensteuerung. Zudem können bestimmte Komponenten gleichzeitig für die Steuerungseinrichtung und die Positioniereinrichtung genutzt werden, z. B. ein gemeinsames Netzteil. Die Integration der Einrichtungen zur Steuerung des Werkzeugantriebs und zur Steuerung des Positionierantriebs erleichtert zudem den Datentransfer zwischen diesen Einrichtungen, sodass eine höhere Datenübertragungsrate möglich ist, was insbesondere bei zeitkritischen Anwendungen vorteilhaft ist. Je nach Auslegung der Ansteuer-Schnittstellen der Steuerungseinrichtung und der Positioniereinrichtung lassen sich verschiedene Werkzeug- bzw. Positionierantriebe mit der Maschinensteuerung betreiben, sodass ein flexibler Einsatz möglich ist.

Ein integriertes Interface nach Anspruch 2, das insbesondere als serielle Datenschnittstelle ausgeführt sein kann, ermöglicht einen schnellen und sicheren Datentransfer zwischen den Mikroprozessoreinbeiten.

Eine Master/Slave-Konfiguration nach Anspruch 3 gewährleistet einen sicheren Betrieb der Maschinensteuerung.

Eine Schrittmotor-Ansteuerung nach Anspruch 4 ermöglicht einen exakten und definierten Positionierantrieb. Grundsätzlich können auch andere Positionierantriebe als Schrittmotoren zusammen mit der erfindungsgemäßen Maschinensteuerung eingesetzt werden.

Eine Rechner-Schnittstelle nach Anspruch 5 ermöglicht den Anschluss eines externen Rechners, was insbesondere zu Programmier- oder Überwachungszwecken von Vorteil ist.

Eine Standard-Schnittstelle nach Anspruch 6, bei der es sich insbesondere um eine USB-Schnittstelle handeln kann, ermöglicht einen unkomplizierten Datentransfer zwischen externen Komponenten und der Maschinensteuerung.

Eine Daten-Schnittstelle nach Anspruch 7 ermöglicht eine flexible Datenkommunikation der Maschinensteuerung mit externen Sensoren und/oder Aktuatoren. Die Daten-Schnittstelle kann einen A/D-Wandler und/oder einen D/A-Wandler aufweisen, kann aber auch als rein digitale Schnittstelle ausgeführt sein.

Über eine Positionier-Schnittstelle nach Anspruch 8 lässt sich die Steuerungseinrichtung zur Ansteuerung weiterer Positionierantriebe erweitern.

Ein serielles Bus-Interface nach Anspruch 9 ermöglicht eine schnelle Datenkommunikation zwischen der Steuerungseinrichtung und mindestens einer externen Antriebssteuerung.

Eine überschreibbare Permanentspeichereinheit nach Anspruch 10 gewährleistet einen einfachen, schnellen und sicheren Datentransfer beim Update eines Ablaufprogramms. Beispiele für eine derartige überschreibbare Permanentspeichereinheit sind eine Flash Memory-Einheit, ein VRAM oder ein EEPROM.

Die überschreibbare Permanentspeichereinheit der Steuerungseinrichtung kann unterteilt sein in
- eine erste Speichersektion zur Ablage eines Ablaufprogramms,
- eine zweite Speichersektion zur Ablage von Grund-Steuer- und Regelungsfunktionen für den Werkzeugantrieb, und
- eine dritte Speichersektion zur Ablage von Werkzeug-Steuerungsparametern.

Eine derartige Unterteilung der überschreibbaren Permanentspeichereinheit, die insbesondere als Flash Memory-Einheit ausgeführt sein kann, ermöglicht ein betriebssicheres Arbeiten der Maschinensteuerung, da verhindert ist, dass Ablaufprogrammdaten und Steuerfunktionsdaten sowie Steuerungsparameterdaten einander ungewollt überschreiben. Das Ablaufprogramm ist vom Anwender frei programmierbar.

Eine zweite Speichersektion kann zusätzlich zur Ablage von Steuerdaten für die Daten-Schnittstelle ausgebildet sein. Eine derartige zweite Speichersektion erweitert die Funktion der Flash Memory-Einheit. Über die dort abgelegten Daten kann dann auch die Daten-Schnittstelle angesprochen werden.

Zumindest die dritte Speichersektion kann über die Standard-Schnittstelle auslesbar sein. Eine Ausführung der dritten Speichersektion ermöglicht einen bequemen Zugriff auf die dort vorhandenen Daten.

Die überschreibbare Permanentspeichereinheit der Positioniereinrichtung kann unterteilt sein in
- eine erste Speichersektion zur Ablage von Grund-Steuer- und Regelungsfunktionen für den Positionierantrieb und
- eine zweite Speichersektion zur Ablage von Positionier-Steuerungsparametern.

Die erste Speichersektion kann zusätzlich zur Ablage von Steuerdaten für die Daten-Schnittstelle ausgebildet sein.

Zumindest die zweite Speichersektion kann über die Standard-Schnittstelle auslesbar sein.

Die Vorteile einer derartigen Speichersektions-Unterteilung der Permanentspeichereinheit der Positioniereinrichtung entsprechen den vorstehend im Zusammenhang mit der Speichersektions-Unterteilung bereits erläuterten Vorteilen.

Die überschreibbare Permanentspeichereinheit kann in die Mikroprozessoreinheit integriert sein. Eine derartige Integration der überschreibbaren Permanentspeichereinheit erhöht die Geschwindigkeit des Datentransfers zwischen der Flash Memory-Einheit und der Mikroprozessoreinheit. Auch eine Integration der Flash Memory-Einheit in die Werkzeug-Mikroprozessoreinheit ist möglich.

Die Steuerungseinrichtung und/oder die Positioniereinrichtung können einen Arbeitsspeicher aufweisen, der als zur Mikroprozessoreinheit separates Bauteil ausgeführt ist. Ein separater Arbeitsspeicher vergrößert die mit Hilfe des Ablaufprogramms verwaltbaren und schnell zugreifbaren Daten. Der Arbeitsspeicher der Steuerungseinrichtung dient insbesondere zur Ablage von Grundfunktionsparametern des Werkzeugantriebs. Der Arbeitsspeicher der Positioniereinrichtung dient insbesondere zur Ablage von Positionierdaten für den mindestens einen Positionierantrieb.

Ein Ausführungsbeispiel der Erfindung wird nachfolgend anhand der Zeichnung näher erläutert. In dieser zeigen:
- Fig. 1: ein Blockschaltbild einer Maschinensteuerung;
- Fig. 2: Sektionsunterteilungen von Speichereinheiten einer Steuerungseinrichtung und einer Positioniereinrichtung der Maschinensteuerung;
- Fig. 3: ein Blockschaltbild, welches die Anwendung der Maschinensteuerung bei der Ansteuerung eines Nähmaschinen-Arbeitsplatzes darstellt.

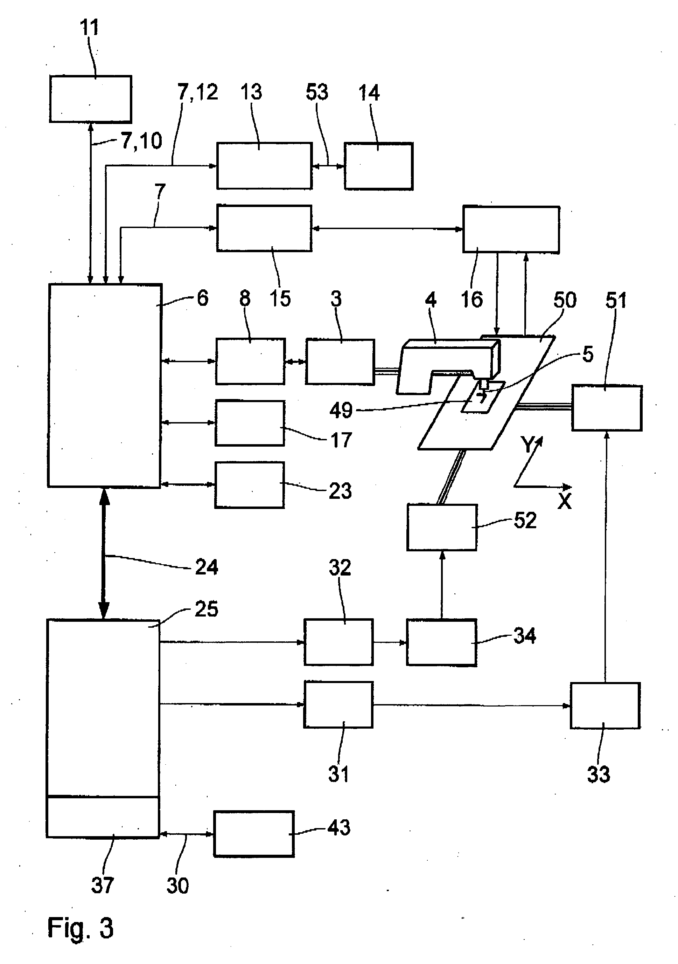

Eine Maschinensteuerung 1 hat eine Steuerungseinrichtung 2, deren Hauptaufgabe in der Ansteuerung eines Werkzeugantriebs 3 besteht. Bei dem Werkzeugantrieb 3 kann es sich um einen Motor, insbesondere um einen DC-Motor, zum Antrieb einer Armwelle einer Nähmaschine 4 (vgl. Fig. 3) handeln, wobei über die Armwelle eine Nähnadel 5 der Nähmaschine 4 angetrieben wird.

Die Steuerungseinrichtung hat eine Werkzeug-Mikroprozessoreinheit bzw. einen Mikrocontroller 6. Über einen internen Datenbus 7 steht die Werkzeug-Mikroprozessoreinheit 6 mit einer Werkzeug-Ansteuer-Schnittstelle 8, die auch als Motortreiber bezeichnet wird, in Signalverbindung. An die Werkzeug-Ansteuer-Schnittstelle 8 kann der Werkzeugantrieb 3 angeschlossen werden. Zwischen der Werkzeug-Ansteuer-Schnittstelle 8 und dem Werkzeugantrieb 3 ist ein bidirektionaler Datenaustausch möglich, wie durch einen Doppelpfeil 9 angedeutet. Über den Datenbus 7 steht die Werkzeug-Mikroprozessoreinheit 6 mit einer Rechner-Schnittstelle 10 in Signalverbindung. Über die Rechner-Schnittstelle 10 kann ein Rechner bzw. Personalcomputer 11 an die Steuerungseinrichtung 2 angeschlossen werden. Auch hier ist ein bidirektionaler Datenaustausch möglich.

Über den Datenbus 7 steht die Werkzeug-Mikroprozessoreinheit 6 mit einer Standard-Schnittstelle 12 in Signalverbindung. Die Standard-Schnittstelle 12 ist bei der dargestellten Ausführung als USB-Schnittstelle ausgebildet. Über die Standard-Schnittstelle 12 können an die Steuerungseinrichtung 2 ein Bedienfeld 13, ein externer, wiederbeschreibbarer Speicher 14, z. B. ein externes USB-Speicherlaufwerk, und gegebenenfalls weitere externe Komponenten angeschlossen werden. Zwischen den an die Standard-Schnittstelle 12 angeschlossenen Komponenten und der Steuerungseinrichtung 2 ist wiederum ein bidirektionaler Datenaustausch möglich. Das Bedienfeld 13 kann insbesondere als Touch Screen ausgeführt sein. Anstelle eines Touch Screens kann auch ein einfaches Bedienfeld mit 7-Segment-LCD und Folientastatur ausgeführt sein.

Über den Datenbus 7 ist die Steuerungseinrichtung 2 mit einer Daten-Schnittstelle 15 in Signalverbindung, die auch als I/O-Interface bezeichnet wird. Über die Daten-Schnittstelle 15 können externe Sensoren und/oder Aktuatoren 16 an die Steuerungseinrichtung 2 angeschlossen werden. Zwischen der Daten-Schnittstelle 15 und den Sensoren bzw. Aktuatoren 16 ist wiederum ein bidirektionaler Datenaustausch möglich. Es können also beispielsweise Sensordaten in die Steuerungseinrichtung 2 eingelesen oder Aktuatordaten aus der Steuerungseinrichtung 2 ausgelesen werden. Die Daten-Schnittstelle 15 kann einen A/D-Konverter und/oder einen D/A-Konverter aufweisen. Es kann sich alternativ auch um eine rein digitale Schnittstelle handeln.

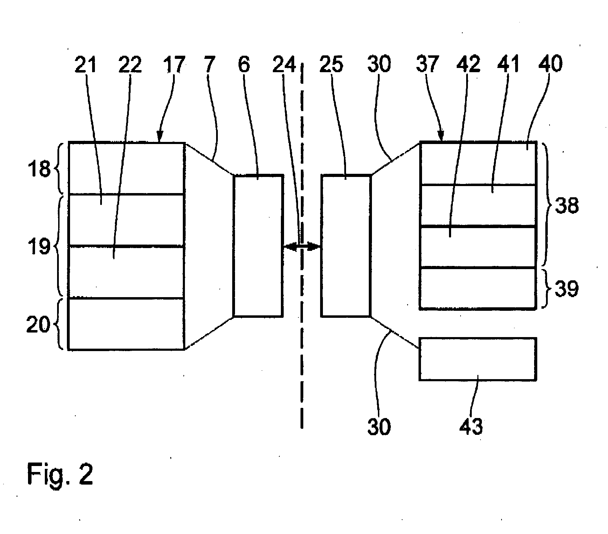

Über den Datenbus 7 steht die Werkzeug-Mikroprozessoreinheit 6 mit einer überschreibbaren Permanentspeichereinheit 17 in Signalverbindung, die als Flash Memory ausgeführt sein kann. Letztere ist in insgesamt drei Speichersektionen 18, 19, 20 unterteilt. In der ersten Speichersektion 18, die in der Figur 2 im oberen Abschnitt des Flash Memory 17 dargestellt ist, ist ein Ablaufprogramm abgelegt, welches einen anwenderspezifischen Arbeitsablauf der Maschinensteuerung 1 vorgibt. Die zweite Speichersektion 19, die in der Figur 2 als mittlerer Abschnitt des Flash Memory 17 dargestellt ist, ist wiederum unterteilt in eine erste Untersektion 21, die in der Figur 2 oben dargestellt ist und in der Grund-Steuer- und Regelungsfunktionen für den Werkzeugantrieb abgelegt sind, und in eine zweite Untersektion 22, die in der Figur 2 unten dargestellt ist und in der Steuerdaten für die Daten-Schnittstelle 15 abgelegt sind. In der dritten Speichersektion 20 des Flash Memory 17, die in der Figur 2 als unterster Abschnitt des Flash Memory 17 dargestellt ist, sind Werkzeug-Steuerungsparameter abgelegt.

Ebenfalls über den Datenbus 7 steht die Werkzeug-Mikroprozessoreinheit 6 mit einem flüchtigen Arbeitsspeicher 23 in Signalverbindung, der auch als RAM bezeichnet wird.

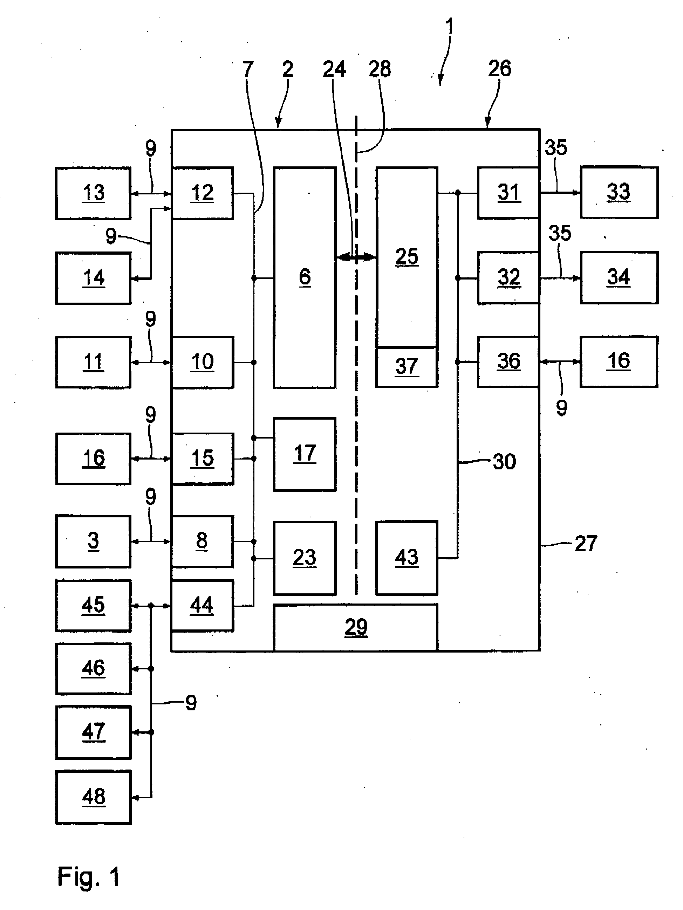

Über ein in den Figuren 1 bis 3 als Doppelpfeil dargestelltes integriertes Interface 24 steht die Werkzeug-Mikroprozessoreinheit 6 mit einer Positionier-Mikroprozessoreinheit 25 in Signalverbindung. Das integrierte Interface 24 ist als serielle Datenschnittstelle ausgeführt. Die Positionier-Mikroprozessoreinheit 25 ist Teil einer Positioniereinrichtung 26 der Maschinensteuerung 1. Die Steuerungseinrichtung 2 und die Positioniereinrichtung 26 sind in einem gemeinsamen Gehäuse 27 der Maschinensteuerung 1 untergebracht. Ein Datentransfer zwischen der Steuerungseinrichtung 2 und der Positioniereinrichtung 26 findet ausschließlich über das integrierte Interface 24 statt. Ansonsten sind die beiden Einrichtungen 2, 26 datenmäßig voneinander getrennt, was in der Figur 1 durch eine gestrichelte Trennlinie 28 angedeutet ist.

Die Steuerungseinrichtung 2 und die Positioniereinrichtung 26 werden von einem gemeinsamen Netzteil 29 versorgt.

Die Positionier-Mikroprozessoreinheit 25 steht über einen Positionier-Datenbus 30 mit zwei Positionier-Ansteuer-Schnittstellen 31, 32 in Signalverbindung. Bei einer alternativen, nicht dargestellten Ausführung der Maschinensteuerung 1 kann auch nur eine Positionier-Ansteuer-Schnittstelle vorgesehen sein, oder es können auch mehr als zwei Positionier-Ansteuer-Schnittsellen vorgesehen sein. Über die Positionier-Ansteuer-Schnittstellen 31, 32 können Positionierantriebe 33, 34 an die Positioniereinrichtung 26 angeschlossen werden. Bei den Positionierantrieben 33, 34 kann es sich um Linearmotoren oder auch um Motoren zur Verstellung um einen definierten Drehwinkel handeln. Dabei wird jeweils genau ein Positionierantrieb an genau eine Positionier-Ansteuer-Schnittstelle angeschlossen. Von den Positionier-Ansteuer-Schnittstellen 31, 32 ist ein unidirektionaler Datentransfer hin zu den Positionierantrieben 33, 34 zur Ansteuerung von diesem möglich, wie in der Figur 1 durch Pfeile 35 angedeutet. Alternativ kann auch ein bidirektionaler Datentransfer zwischen den Positionier-Ansteuer-Schnittstellen 31, 32 und den Positionierantrieben 33, 34 vorgesehen sein. Dies ist dann beispielsweise vorgesehen, wenn die Positionierantriebe 33, 34 ihre jeweilige Momentanposition erfassen und entsprechende Positionsinformationen über die Positionier-Ansteuer-Schnittstellen 31, 32 an die Positionier-Mikroprozessoreinheit 25 zur weiteren Verarbeitung übermitteln können. Die Datenkommunikationswege 9, 35 können kabelgebunden oder kabellos realisiert sein. Bei der dargestellten Ausführung handelt es sich bei den Positionier-Ansteuer-Schnittstellen 31, 32 um Schrittmotor-Ansteuerungen, die auch als Schrittmotor-Treiber bezeichnet werden. Die Hauptaufgabe der Positioniereinrichtung 26 ist die Ansteuerung der Positionierantriebe 33, 34.

Über den Positionier-Datenbus 30 steht die Positionier-Mikroprozessoreinheit 25 mit einer Daten-Schnittstelle 36 der Positioniereinrichtung 26 in Signalverbindung. Die Daten-Schnittstelle 36 wird über die Werkzeug-Mikroprozessoreinheit 6 gesteuert. Die Daten-Schnittstelle 36 kann genauso aufgebaut sein, wie die Daten-Schnittstelle 15 der Steuerungseinrichtung 2. Auch über die Daten-Schnittstelle 36 der Positioniereinrichtung 26 lässt sich eine Datenkommunikation zu externen Aktuatoren bzw. Sensoren 16 herstellen.

In die Positionier-Mikroprozessoreinheit 25 ist eine weitere überschreibbare Permanentspeichereinheit 37 integriert, die ebenfalls als Flash Memory ausgeführt sein kann. Das Flash Memory 37 ist in zwei Speichersektionen 38, 39 unterteilt, die in der Figur 2 schematisch dargestellt sind. Die in der Figur 2 oben dargestellte erste Speichersektion 38 ist wiederum unterteilt in drei in der Figur 2 untereinander dargestellte Untersektionen 40,41,42. Die erste Untersektion 40 enthält Grund-Steuer- und Regelungsfunktionen für die erste Positionier-Ansteuer-Schnittstelle 31. Diese Crund-Steuer- und Regelungsfunktionen können vom Ablaufprogramm, das in der ersten Speichersektion 18 des Flash Memory 17 abgelegt ist, ausgeführt, aber nicht verändert werden.

Die zweite Untersektion 41 der ersten Speichersektion 38 des Flash Memory 37 der Positioniereinrichtung 26 enthält Grund-Steuerfunktionen für die zweite Positionier-Ansteuer-Schnittstelle 32. Hier gilt entsprechend, was zur ersten Untersektion 40 ausgeführt wurde.

Die dritte Untersektion 42 der ersten Speichersektion 38 des Flash Memory 37 der Positioniereinrichtung 26 enthält Steuerdaten für die Daten-Schnittstelle 36 der Positioniereinrichtung 26. Auf diese Steuerdaten und damit auf die Grund-Steuerfunktionen der Daten-Schnittstelle 36 kann mit Hilfe des Ablaufprogramms in der ersten Speichersektion 18 des Flash Memory 17 zugegriffen werden. Diese Steuerdaten können vom Ablaufprogramm jedoch nicht verändert werden.

Die zweite Speichersektion 39 des Flash Memory 37 der Positioniereinrichtung 26 enthält Positionier-Steuerungsparameter für die Positionierantriebe 33, 34. Bei einer Schrittmotorausfführung gehören zu derartigen Steuerungsparametern beispielsweise der Phasenstrom und die Maximalgeschwindigkeit sowie gegebenenfalls auch die Schrittweite der Schrittmotoren. Über das in der ersten Speichersektion 18 abgelegte Ablaufprogramm können die Positionier-Steuerungsparameter verändert werden.

Über den Positionier-Datenbus 30 steht die Positionier-Mikroprozessoreinheit 25 weiterhin mit einem flüchtigen Arbeitsspeicher 43 in Signalverbindung, der auch als RAM bezeichnet wird. Im RAM 43 der Positioniereinrichtung 26 sind Positionsdaten, beispielsweise X/Y-Koordinaten für die Positionierantriebe 33, 34 temporär abgelegt und können von der Positionier-Mikroprozessoreinheit 25 zur Ausführung des Ablaufprogramms abgerufen werden.

Die Werkzeug-Mikroprozessoreinheit 6 und die Positionier-Mikroprozessoreinheit 25 weisen eine Master/Slave-Konfiguration auf. Die Positionier-Mikroprozessoreinheit 25 ist also beim Abarbeiten des Ablaufprogramms auf Steuerinformationen der Werkzeug-Mikroprozessoreinheit 6 angewiesen. Eine Beeinflussung von Daten, die im Flash Memory 17 der Werkzeug-Mikroprozessoreinheit 6 abgelegt sind, ist über die Positionier-Mikroprozessoreinheit 25 nicht möglich.

Über den Datenbus 7 der Steuerungseinrichtung 2 steht die Werkzeug-Mikroprozessoreinheit 6 mit einer Positionier-Schnittstelle 44 in Signalverbindung. Bei der dargestellten Ausführung handelt es sich bei der Positionier-Schnittstelle 44 um ein serielles Bus-Interface. Über die Positionier-Schnittstelle 44 kann mindestens eine externe Antriebssteuerung an die Steuerungseinrichtung 2 angeschlossen werden. Bei der Ausführung nach Figur 1 sind insgesamt vier derartige externe Antriebssteuerungen 45, 46, 47,48 dargestellt. Die externen Antriebssteuerungen 45 bis 47 dienen zur Ansteuerung weiterer, nicht dargestellter Positionierantriebe. Hierzu können die externen Antriebssteuerungen 45 bis 47 grundsätzlich so aufgebaut sein wie die Positioniereinrichtung 26. Im Unterschied zur Positioniereinrichtung 26 sind die externen Antriebssteuerungen 45 bis 47 jedoch in externen Gehäusen untergebracht. Die externe Antriebssteuerung 48 dient zum Anschluss eines möglichen weiteren Werkzeugantriebs und ist ebenfalls in einem externen Gehäuse untergebracht. Zwischen der Positionier-Schnittstelle 44 und den externen Antriebssteuerungen 45 bis 48 ist wiederum ein bidirektionaler Datenverkehr möglich.

Figur 3 zeigt ein Blockschaltbild einer Anwendung der Maschinensteuerung 1 bei der Steuerung eines Nähmaschinen-Arbeitsplatzes. Die Nähnadel 5 durchtritt ein Stichloch in einer Stichplatte 49, die wiederum Teil einer Auflageplatte 50 ist. Die Auflageplatte 50 ist mit einer X-Vorschubmechanik 51 und mit einer Y-Vorschubmechanik 52 mechanisch verbunden. Die X-Vorschubmechanik 51 wird vom ersten Positionierantrieb 33, der als X-Positionierantrieb wirkt, angetrieben. Die Y-Vorschubmechanik 52 wird vom zweiten Positionierantrieb 34, der als Y-Positionierantrieb wirkt, angetrieben. Die Stichplatte 49 hat also ein X/Y-Nähfeld. Die Y-Achse steht dabei senkrecht auf der X-Achse, wobei diese beiden Achsen eine horizontal, also parallel zur Auflageplatte 50 verlaufende Ebene aufspannen.

In Bezug auf die Datenkommunikation des Standard-Speichermediums 14 mit der Steuerungseinrichtung 2 zeigt die Figur 3 eine Variante zur Kommunikation nach Figur 1. Bei der Variante nach Figur 3 kommuniziert das Standard-Speichermedium 14 direkt über eine bidirektionale Signalverbindung 53 mit einem Prozessor des Bedienfelds 13.

Beim Betrieb des Nähmaschinen-Arbeitsplatzes nach Figur 3 wird der komplette Funktionsablauf von der Werkzeug-Mikroprozessoreinheit 6 gesteuert. Die Positionier-Mikroprozessoreinheit 25 übernimmt die Ansteuerung des X-Positionierantriebs 33 und des Y-Positionierantriebs 34. Vorgaben über Art und Umfang der Ansteuerdaten für die X-Achse und Y-Achse erhält die Positionier-Mikroprozessoreinheit 25 über die Werkzeug-Mikroprozessoreinheit 6. Die Übermittlung von Ansteuerdaten sowie Statusinformationen über den Funktionsablauf erfolgen mit Hilfe des integrierten Interface 24 zwischen den Mikroprozessoreinheiten 6, 25. Die Positionier-Mikroprozessoreinheit 25 steuert ihre Peripherie ausschließlich nach Vorgabe des Ablaufprogramms, das von der Werkzeug-Mikroprozessoreinheit 6 ausgeführt wird. Über das Bedienfeld 13 können Eingaben, z. B. Veränderungen von Steuerungs- oder Nähparametern, vorgenommen werden.

Über die Standard-Schnittstelle 12 oder über die bidirektionale Signalverbindung 53 kann das Standard-Speichermedium 14, z. B. ein USB-Memorystick, als Datenspeicher an die Steuerung angeschlossen werden. Alle relevanten Daten, insbesondere das Ablaufprogramm sowie die Steuerungs- und Antriebsparameter und beispielsweise X/Y-Daten, können so in die Flash Memory-Einheiten 17, 37 geladen und dort abgespeichert werden. An die Werkzeug-Ansteuez-Schnittstelle 8 können beispielsweise DC-Motoren unterschiedlicher Leistungen und Baugrößen angeschlossen werden. Die Steuerungseinrichtung 2 kann über die im Flash Memory 17 abgelegten Steuerungsparameter an den jeweiligen Typ des Werkzeugantriebs 3 angepasst werden. An die Positionier-Ansteuer-Schnittstellen 31, 32 können die Positionierantriebe 33, 34, insbesondere Schrittmotoren verschiedener Hersteller und Leistungsklassen, angeschlossen werden. Über die im Flash Memory 37 abgelegten Antriebsparameter ist eine Anpassung an den jeweiligen Antriebstyp möglich. Über die Daten-Schnittstelle 15 und, was in der Figur 3 nicht dargestellt ist, auch über die Daten-Schnittstelle 36 können die Aktuatoren und/oder Sensoren 16 angeschlossen werden. Eine Funktionszuordnung der Aktuatoren sowie Schaltpegel der Sensoren können vom Anwender frei programmiert werden. Beispiele für Sensoren sind Nähgut-Dickensensoren oder Fadenspannungs-Sensoren sowie optische oder mechanische Nähgut-Positionssensoren. Beispiele für Aktuatoren sind Zuführmimiken für Nähgut.

Die Werkzeug-Mikroprozessoreinheit 6 weist eine Vorprogrammierung auf, die in der zweiten Speichersektion 19 des Flash Memory 17 sowie in der ersten Speichersektion 38 des Flash Memory 37 abgelegt sind. Diese Vorprogrammierung enthält Grundfunktionen zum Testlauf des Werkzeugantriebs 3 sowie der Positionierantriebe 33, 34 und zum Test der Aktuatoren bzw. Sensoren 16. Steuerungsparameter für diese Komponenten können zusätzlich über das Bedienfeld 13 eingestellt und verändert werden. Die Positionier-Mikroprozessoreinheit 25 weist eine Vorprogrammierung auf, sodass die Positionier-Mikroprozessoreinheit 25 Steuerbefehle für die Positionierantriebe 33, 34 und die positioniereinrichtungsseitigen Aktuatoren bzw. Sensoren 16 über die Werkzeug-Mikroprozessoreinheit 6 empfangen kann, derartige Steuerbefehle ausführen kann und Statusmeldungen an die Werkzeug-Mikroprozessoreinheit 6 zurücksenden kann.

Zur Vorbereitung der Maschinensteuerung 1 programmiert der Anwender zunächst das Ablaufprogramm mit Hilfe des Rechners 11 und einer Entwicklungssoftware. Die kompilierten Ablaufprogramm-Daten werden dann entweder direkt über die Rechner-Schnittstelle 10 oder mit Hilfe des Standard-Speichermediums 14 an die Maschinensteuerung 1 übergeben. Das Ablaufprogramm wird in der ersten Speichersektion 18 des Flash Memory 17 abgelegt. Die Werkzeug-Mikroprozessoreinheit 6 steuert dann den Funktionsablauf gemäß dem Ablaufprogramm. Das Ablaufprogramm enthält auch Informationen zur Programmierung des Bedienfeldes 13. Darin enthalten sind Informationen über die Tastenbelegung sowie Informationen zur Anzeige von Statusmeldungen, Bildern, Piktogrammen und Nähparametern. Sämtliche für den Funktionsablauf relevanten Daten und Parameter können am Bedienfeld 13 dargestellt und verändert werden. Das Bedienfeld 13 kann auf diese Weise an die Funktionen des Nähmaschinen-Arbeitsplatzes angepasst werden.

Anschließend programmiert der Anwender mit Hilfe des Rechners 11 und der vorstehend schon genannten Entwicklungssoftware oder einer weiteren Entwicklungssoftware Koordinaten für die X-Achse und die Y-Achse des X/Y-Nähfelds 50. Diese X/Y-Daten werden dann per Datenübertragung entweder direkt über die Rechner-Schnittstelle 10 oder über das Standard-Speichermedium 14 an die Maschinensteuerung 1 übergeben. Die X/Y-Daten werden von der Werkzeug-Mikroprozessoreinheit 6 abhängig vom Ablaufprogramm an die Positionier-Mikroprozessoreinheit 25 übertragen und dort im RAM 43 abgelegt. Während des Funktionsablaufs, gesteuert durch das Ablaufprogramm und die Werkzeug-Mikroprozessoreinheit 6, werden parallel von der Positionier-Mikroprozessoreinheit 25 die Positionierantriebe 33, 34 angesteuert und gemäß den im RAM 43 abgelegten Koordinaten verfahren. Dabei werden Statusmeldungen über den Zustand der Ansteuerung der Positionierantriebe 33, 34 von der Positionier-Mikroprozessoreinheit 25 an die Werkzeug-Mikroprozessoreinheit 6 übergeben.

Die im RAM 43 abgespeicherten X/Y-Daten werden von der Positionier-Mikroprozessoreinheit 25 zyklisch und synchron zum jeweiligen Drehwinkel der vom Werkzeugantrieb 3 angetriebenen Armwelle an die Positionierantriebe 33, 34 ausgegeben. Ein Startzeitpunkt für den Antrieb der Positionierantriebe 33, 34 bezogen auf einen Drehwinkel einer Antriebswelle des Werkzeugantriebs 3 oder einer Winkelposition der Armwelle kann vom Ablaufprogramm an den entsprechenden Maschinentyp angepasst werden. Je nach dem Nähmaschinentyp kann beispielsweise eine von den Positionierantrieben 33, 34 durchgeführte Kulissenbewegung vor oder auch nach dem Eintritt der Nähnadel 5 in die Stichplatte 49 erfolgen. Damit Referenzpunkte oder eine Nähgut-Einlegeposition angefahren werden können, werden noch zusätzliche X/Y-Koordinaten über die Positionierantriebe 33, 34 asynchron zum Werkzeugantrieb 3 angefahren. Nähstich-Anzahlen sowie zusätzliche asynchrone Daten zum Funktionsablauf gehören daher zu weiteren im RAM 43 abgelegten Koordinaten. Sämtliche im RAM 43 sowie in den Speichersektionen 18,20 und 39 abgelegten Daten können vom Anwender über das Bedienfeld 13 verändert und/oder editiert werden. Ob und welche Daten in welchem Wertebereich verändert werden, kann über das Ablaufprogramm vorgegeben werden.

Die dritte Speichersektion 20 kann über die Standard-Schnittstelle 12 ausgelesen werden. Auf diese Weise kann der Anwender beispielsweise den aktuellen Stand der Steuerungsparameter auf einen externen Rechner laden und dort darstellen oder modifizieren.

Auch die zweite Speichersektion 39 des Flash Memory 37 der Positioniereinrichtung 26 sowie der RAM 43 können über die Standard-Schnittstelle 12 ausgelesen werden.

## Patentansprüche

1. Maschinensteuerung (1)
- mit einer Steuerungseinrichtung (2),
-- mit einer Werkzeug-Mikroprozessoreinheit (6),
-- mit mindestens einer Werkzeug-Ansteuer-Schnittstelle (8) für einen Werkzeugantrieb (3),
- mit einer Positioniereinrichtung (26),
-- mit einer Positionier-Mikroprozessoreinheit (25),
-- mit mindestens einer Positionier-Ansteuer-Schnittstelle (31, 32) für einen Positionierantrieb (33, 34),
- wobei die Steuerungseinrichtung (2) und die Positioniereinrichtung (26) in einem gemeinsamen Gehäuse (27) untergebracht sind.

2. Maschinensteuerung nach Anspruch 1, **dadurch gekennzeichnet, dass** die Werkzeug-Mikroprozessoreinheit (6) und die Positionier-Mikroprozessoreinheit (25) über ein integriertes Interface (24) miteinander verbunden sind.

3. Maschinensteuerung nach Anspruch 1 oder 2, **dadurch gekennzeichnet, dass** die Werkzeug-Mikroprozessoreinheit (6) und die Positionier-Mikroprozessoreinheit (25) eine Master/Slave-Konfiguration aufweisen.

4. Maschinensteuerung nach einem der Ansprüche 1 bis 3, **dadurch gekennzeichnet, dass** die mindestens eine Positionier-Ansteuer-Schnittstelle (31, 32) zur Ansteuerung eines Positionierantriebs (33, 34), der als Schrittmotor ausgeführt ist, ausgebildet ist.

5. Maschinensteuerung nach einem der Ansprüche 1 bis 4, **dadurch gekennzeichnet, dass** die Steuerungseinrichtung (2) und/oder die Positioniereinrichtung (26) mindestens eine Rechner-Schnittstelle (10) für einen externen Rechner (11) aufweisen.

6. Maschinensteuerung nach einem der Ansprüche 1 bis 5, **dadurch gekennzeichnet, dass** die Steuerungseinrichtung (2) und/oder die Positioniereinrichtung (26) mindestens eine Standard-Schnittstelle (12) aufweisen.

7. Maschinensteuerung nach einem der Ansprüche 1 bis 6, **dadurch gekennzeichnet, dass** die Steuerungseinrichtung (2) und/oder die Positioniereinrichtung (26) eine Daten-Schnittstelle (15, 36) zum Einlesen bzw. Auslesen von externen Sensordaten und/oder Aktuatordaten aufweisen.

8. Maschinensteuerung nach einem der Ansprüche 1 bis 7, **dadurch gekennzeichnet, dass** die Steuerungseinrichtung (2) mindestens eine Positionier-Schnittstelle (44) für eine externe Antriebssteuerung (45 bis 48) aufweist.

9. Maschinensteuerung nach Anspruch 8, **dadurch gekennzeichnet, dass** die Positionier-Schnittstelle (44) als serielles Bus-Interface aufgebaut ist.

10. Maschinensteuerung nach einem der Ansprüche 1 bis 9, **dadurch gekennzeichnet, dass** die Steuerungseinrichtung (2) und/oder die Positioniereinrichtung (26) eine überschreibbare Permanentspeichereinheit (17,37) aufweisen.
